Europäisches Patentamt

European Patent Office

Office européen des brevets

(19)

(11) Publication number: **0 003 397**
**B1**

(12) **EUROPEAN PATENT SPECIFICATION**

(45) Date of publication of patent specification: **04.11.81**    (51) Int. Cl.³: **F 16 H 47/04**

(21) Application number: **79300049.8**

(22) Date of filing: **11.01.79**

(54) Coaxial multi-range gear train for transmissions.

(30) Priority: **25.01.78 US 872252**
**25.01.78 US 872255**

(43) Date of publication of application:
**08.08.79 Bulletin 79/16**

(45) Publication of the grant of the European patent:
**04.11.81 Bulletin 81/44**

(84) Designated Contracting States:
**DE FR GB NL SE**

(56) References cited:
**DE - A - 1 530 792**
**US - A - 3 489 036**
**US - A - 3 712 154**
**US - A - 3 722 323**
**US - A - 3 777 593**

(73) Proprietor: **GENERAL ELECTRIC COMPANY**
**1 River Road**
**Schenectady New York 12305 (US)**

(72) Inventor: **Reed, Bradley Oliver**
**59 Sherwood Drive**
**Pittsfield Massachusetts 01201 (US)**
Inventor: **Nolan, John Michael**
**4 Weller Avenue**
**Pittsfield Massachusetts 01201 (US)**

(74) Representative: **Burnside, Michael et al,**
**c/o Michael Burnside & Partners 2 Serjeants' Inn**
**Fleet Street**
**London EC4Y 1HL (GB)**

Courier Press, Leamington Spa, England.

# Coaxial multi-range gear train for transmissions

The invention is a multi-range synchronous shifting gear train package and specific gear train elements therefor for hydromechanical transmissions comprising a plurality of planetary gear sets wherein the planetary gear sets, the inputs and the outputs are coaxial and wherein the combination of the gear train package with an aligned infinitely variable component and mechanical input forms an all coaxial, synchronous shifting, multi-range hydromechanical transmission having a distinct reverse and three forward hydromechanical ranges. The invention also has utility when combined with a "steer over" device and with right and left final drive devices to form a steering transmission. The term coaxial is used herein to include the case where two items are rotatable one within the other about a common axis as well as the case where two items are rotatable in axially spaced relation about the common axis.

There have been prior disclosures of coaxial gear train hydromechanical transmissions or gear trains for such transmissions which have less than three forward ranges. These include the United States patent of Cockrell, 3,489,036, which is an all coaxial, synchronous shifting truck transmission having a hydromechanical low/reverse range and a hydromechanical high range.

U.S. Patent No. 3,722,323 (Welch) discloses one example of a multirange coaxial gearbox used as part of a multispeed planetary stepped ratio (non-synchronous shifting) truck transmission driven in part by a torque converter. The gearbox produces a high number of range ratios in either of the two modifications disclosed and uses a first stage having a plurality of planetary gearsets to mix the hydrodynamic output of the torque converter and a mechanical input to produce different hydrokinetic first stage outputs, depending on the ratio selected. A second stage uses a plurality of planetary gearsets to further mix the output of the first stage with the mechanical input in a plurality of combinations to generate a transmission output. The gearbox has a stepped shift characteristic.

The transmission of Mooney et al., U.S. Patent No. 3,777,593, most closely approaches the result obtained by the subject gear train and transmissions in that it contains an all coaxial, synchronous shifting, multi-range truck transmission providing a hydrostatic low and two additional higher forward hydromechanical ranges wherein reverse gear is a part of the low range. This coaxial transmission is, therefore, a three range transmission having one hydrostatic and two hydromechanical ranges based on two adjacent coaxial planetary sets wherein one input is placed on both suns, one carrier is the output and is tied to the other ring. This is a fairly common combination of planetary sets (Simpson gear train) but Mooney by reversing the normal order of the two sets, inserting the second input by means of an axial shaft to the far side of the planetaries and using a drum to connect the "inside" planetary to output has obtained a very compact three range transmission that is coaxial. However, Mooney's transmission is limited in flexibility and in range of torque output. The maximum torque used by Mooney is a sun to ring reduction from the hydrostatic input and it appears that the arrangement precludes a sun to carrier reduction. Speed is also limited as third gear is restricted to a range having the same slope as first/reverse and the total speed variation of first and reverse combined requires a trade-off between first range torque and total transmission speed range in a situation in which the total forward range of speed is already limited by use of one half of the range of the hydraulic motor in the first range for reverse. There is no possibility of adding additional ranges as all available combinations of the two inputs with the four elements of the two planetaries not connected to output have been used.

The present invention overcomes these limitations and provides an additional forward gear range.

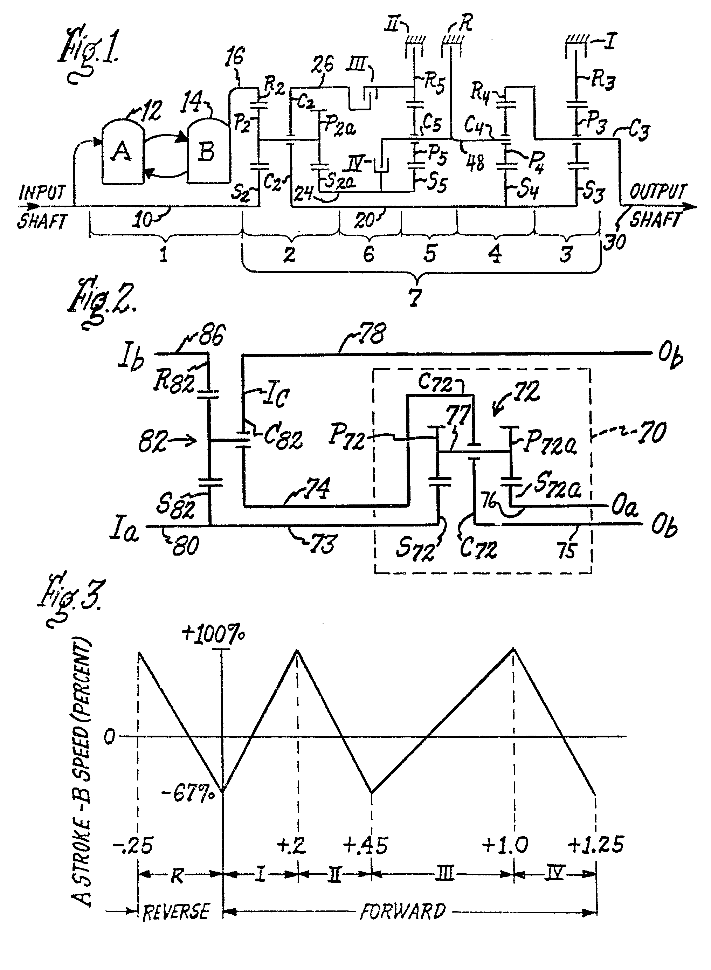

In the accompanying drawings FIGURE 1 is a schematic illustration of a single output hydromechanical transmission according to the invention.

FIGURE 2 is an illustration of an alternative implementation of the component illustrated as gear set 2 in FIGURE 1.

FIGURE 3 is a graphic display of the relationship of the capacity of a variable displacement unit A, and the resulting speed in a constant displacement unit B of an infinitely variable component, to the synchronous shift points and output and input speeds.

FIGURE 4 is a block diagram showing the application of the coaxial gear train package of FIGURE 1 to a novel steering transmission.

FIGURE 5 is a schematic illustration of a hydromechanical steering transmission incorporating the coaxial gear train package of FIGURE 1 according to the block diagram of FIGURE 4.

FIGURE 6 is a schematic illustration of a single output hydromechanical transmission substantially identical to that of FIGURE 1 but wherein there is a different interconnection between the "B" unit 14 of the infinitely variable component and the gear train package 7.

FIGURE 7 is a schematic illustration of a part of FIGURE 6 wherein some of the elements forming the interconnection between the "B" unit of the infinitely variable component and the gearbox are shown in elevation.

The drawings illustrate the novel gear train by use of a commonly accepted schematic system referred to as "stick" drawings wherein the contact between intermeshing gears is shown by two spaced parallel lines and wherein a bearing or journaled support of a gear is shown by a pair of parallel lines, one on each side of the shaft or spindle on which the gear is journaled.

A preferred embodiment of the invention in its most simple form of application to a transmission is illustrated in FIGURE 1 of the drawings. It is an all coaxial infinitely variable multi-range synchronous shifting hydromechanical transmission requiring just four planetary gear sets for a transmission having an independent reverse and plural forward ranges (i.e., three or more distinct ranges). The transmission illustrated is coaxial about the common axis of input shaft 10, gear train package shaft 20, and output shaft 30 and is made up of an infinitely variable component 1, four planetary gear sets 2, 3, 4 and 5, and additional range clutches 6. The planetaries and clutches with shaft 20 constitute a novel multi-range coaxial gear train package 7 which has utility in combination with the hydraulic component 1 as shown to constitute a heavy duty truck transmission as well as in other combinations. As a truck transmission, the input shaft 10 is attached to the vehicle power plant and the output shaft 30 to a drive shaft to provide power to driving wheels as, for example, through a differential. The infinitely variable component 1 is illustrated as a hydraulic component having a variable capacity positive displacement hydraulic pump "A" (unit 12) which drives a positive displacement hydraulic motor "B" (unit 14), to drive an output 16 as the result of attachment of pump 12 to the input shaft 10 which is driven by an engine. The hydraulic motor 14 may have either a fixed or a variable capacity. All of pump 12, motor 14 and hydrostatic output drum 16 rotate about the axis of shaft 10. Although the system as contemplated in the invention preferably uses radial ball piston units for "A" and "B", other hydraulic infinitely variable components may be employed. Planetary gear set 2, which is driven both by shaft 10, which is mechanically driven by the power plant, and by output 16 of the hydrostatic unit, can be regarded as a mixer set because it has as one of its functions the production of a hydromechanical output as a result of mixing the mechanical output of shaft 10 and the hydrostatic output of 16. Planetary set 2 is a compound planetary set which serves to produce multiple inputs to various elements including shaft 20, hollow shaft 24 and drum 26 which extend coaxially within each other about the axis of shaft 20. These elements 20, 24, 26 are sometimes referred to below respectively as first, second and third intermediate output shafts.

The operation of planetary gear set 2 is as follows. Carrier $C_2$ of set 2 is driven as a result of the action on planetary gears $P_2$ of the rotation of sun gear $S_2$ driven mechanically by shaft 10 and the rotation of ring gear $R_2$ driven hydrostatically by motor "B" through drum 16. Carrier $C_2$ not only drives central shaft 20 and drum shaft 26, but also permits the use of a second set of planetary gears $P_{2a}$ which exactly reproduce the actions of the primary planetary gears $P_2$ of the set 2. This arrangement causes the second set of planetary gears $P_{2a}$ to drive sun gear $S_{2a}$ to produce on sun gear $S_{2a}$ a movement which is proportional or identical to the movement of sun gear $S_2$. Therefore, hollow shaft 24 rotates at a speed which is proportional or identical to that of input shaft 10, depending on the relative sizes of sun gears $S_2$ and $S_{2a}$. A different pair of outputs of planetary set 2 can be obtained by rearranging the inputs as, for example, driving sun $S_2$ hydrostatically and ring $R_2$ mechanically. In another variation, the output of the infinitely variable component 1 can be conveyed to the compound planetary set 2 by means of a hollow shaft 60 as shown in FIGURES 6 and 7 to an extra set of planetary gears rather than ring gear $R_2$ as shown in FIGURE 1 to permit more latitude in selection of gear ratios as will be explained more fully below with respect to the description of FIGURES 6 and 7.

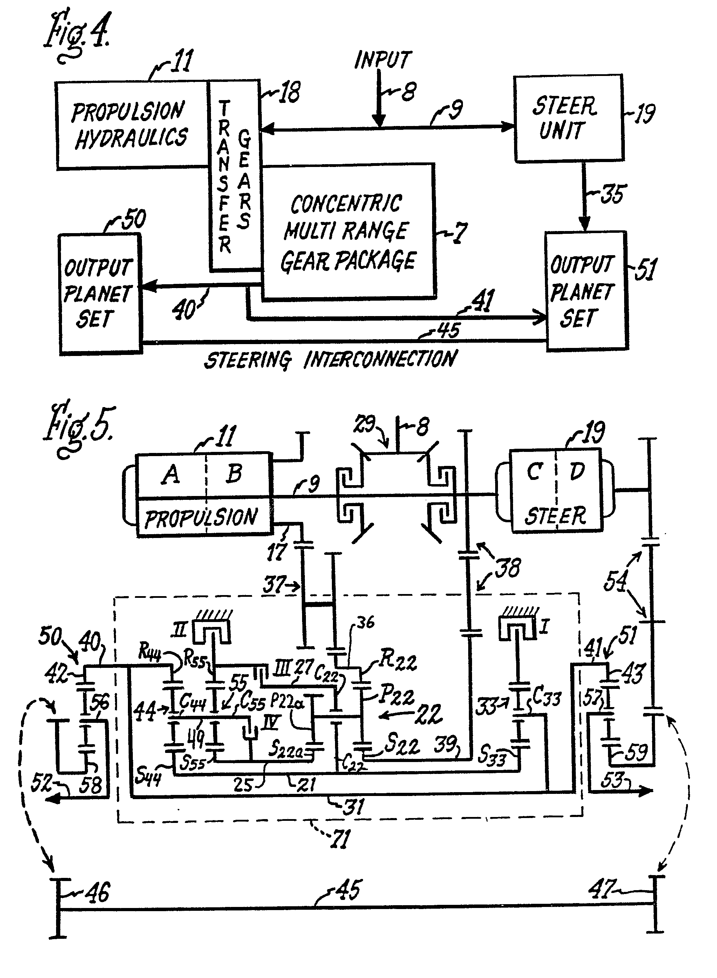

As apparent from the separate FIGURE 6 illustration, the concept illustrated in FIGURE 1 requires the passing of one motion, i.e., that of sun $S_2$, through another motion, i.e., that of carrier $C_2$. In its very fundamental form, this is the same as exchanging the motions of two sets of two shafts that extend coaxially one within the other. FIGURE 2 illustrates a different implementation of the principle illustrated in gear set 2 of FIGURE 1. The FIGURE 2 implementation is in the form of the combination of separate gears within broken line 70 to exchange motions between two sets 73, 74 and 75, 76 of two shafts that extend coaxially one within the other after two inputs $I_a$ and $I_b$ are used to generate a new function. These gears 70 include a compound planetary set 72 coaxial with and interconnecting the two sets of shafts 73, 74 and 75, 76, all of which rotate about the common axis defined by axial shafts 73 and 75.

The compound planetary set 72, which has no ring gears, is made up of a planetary carrier $C_{72}$ which carries dual sets of planetaries $P_{72}$ and $P_{72a}$, each pair of which are keyed together by a shaft 77 journalled in a bearing in the carrier $C_{72}$. The planetaries are meshed with sun gears $S_{72}$ and $S_{72a}$ to drive sun 72a responsive to sun 72. By this arrangement, the rotational motion of axial shaft 73 on the input side is passed through hollow shaft 74 to be applied to hollow shaft 76 while the motion of 74 is transferred to axial shaft 75. When combined with planetary set 82, the arrangement shown in FIGURE 2 performs the same function as the compound planetary set 2 of FIGURE 1.

Gear set 70, therefore, when added to planetary set 82 provides for the relocation of the functions produced by set 82. This gear combination, in addition to solving a problem inherent in multirange coaxial gearboxes as contemplated by this invention, has application to and utility in other gear trains.

Referring again to FIGURE 1, the gear train package 7 is made up of four planetary gear sets 2, 3, 4 and 5 and additional range clutches 6 wherein planetary sets 3, 4 and 5 provide for the combining of the mechanical input from shaft 10 (and shaft 24) and the hydromechanical output of planetary set 2 in different distinct ratios to provide different speed ranges.

The first and lowest range is derived in this configuration by use of the planetary gear set 3 wherein the ring gear $R_3$ of that set is provided with a brake I. Application of that brake causes planetary set 3 to drive the output shaft 30 from the basic hydromechanical output of planetary set 2 (on shaft 20) with a sun to carrier speed reduction as determined by the ratio of the gears $S_3$, $P_3$, $R_3$ of set 3. Planetary set 4 has a dual function. With brake R, and only brake R applied, carrier $C_4$ is stationary, holding the centers of the shafts of planet gears $P_4$ so that ring gear $R_4$ is driven by shaft 20 through sun gear $S_4$ and planet gears $P_4$. Ring gear $R_4$ drives carrier $C_3$ and output shaft 30 directly. The addition of one element in the train over the number of elements used in the first range causes a reversal of direction and the use of sun to ring a different ratio than produced in range I.

Planetary set 5 provides a different combination of mechanical and hydrostatic inputs as set 5 with brake II applied causes planet gears $P_5$ and carrier $C_5$ to be driven mechanically by shaft 24 through sun gear $S_5$ at a sun to carrier speed reduction. The connection between carriers $C_4$ and $C_5$ can also be described as a hollow shaft which with the interconnection with the attachment for clutch IV can be referred to as an additional range shaft 48. Rotation of carrier $C_4$ causes ring gear $R_4$ to be driven as a resultant of the inputs to both carrier $C_4$ and sun $S_4$ which resultant is a further mixing of the hydromechanical output of carrier C2 furnished through sun $S_4$ and the mechanical input from shaft 24 at the sun-carrier reduction from set 5. Clutches III and IV provide for additional inputs to cause carrier $C_5$ to produce two further outputs as the basis for two additional ranges. Clutch III, when engaged, places on ring gear $R_5$ the basic hydromechanical product of the mixer set 2 on shaft 26 so that carrier $C_5$ will be driven as the resultant of a combination of that input and the mechanical input from shaft 24 on sun $S_5$. Clutch IV locks planetary set 5 so that the output of carrier $C_5$ is one to one with, or the same as, shaft 24 and sun $S_5$ which is proportional to the mechanical input speed on shaft 10.

The combination of planetaries 3 and 4 is similar to a component previously used in various gear arrangements including other transmissions, and usually referred to as a Simpson gear train.

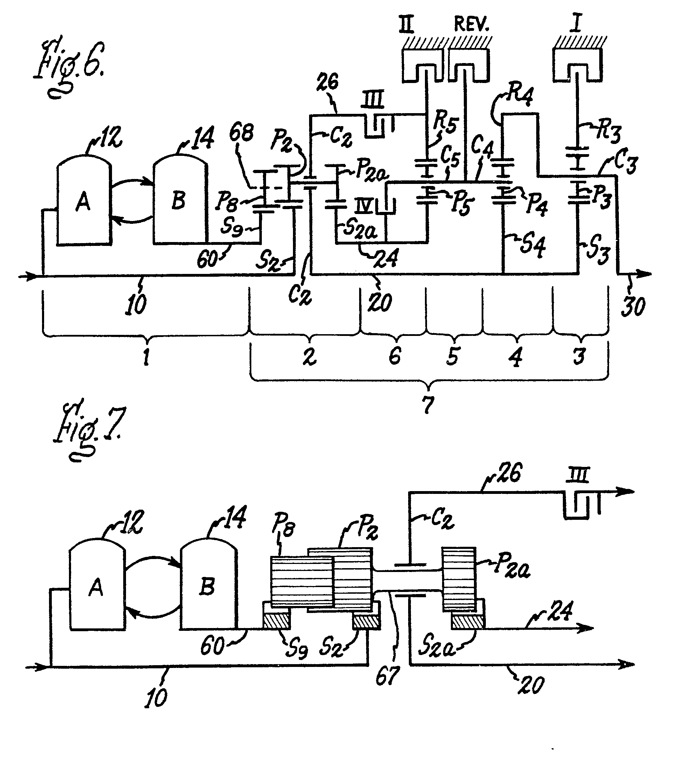

Use of the gear train package of the present invention as a component of a transmission can be explained with reference to FIGURE 3. FIGURE 3, which is based on the use of a variable displacement hydraulic pump and a constant displacement hydraulic motor B, serves to illustrate one feasible implementation of the synchronous shifting transmission. In this implementation the hydraulic components and the gear train ratios are selected so that a negative stroke of 67% on the pump "A" with its resulting running of the hydraulic motor "B" in reverse at 67% of pump speed will cause ring gear $R_2$ to run backwards at a speed which offsets the forward speed of sun gear $S_2$ so that, although the planetaries $P_2$ and $P_{2a}$ are spinning, carrier $C_2$ stands still. This permits the engagement of either the first range brake I of the reverse brake R without causing final output shaft 30 to rotate, as both ranges are driven from the basic hydromechanical output of planetary set 2 on shaft 20. The 67% is illustrative only, as indicated by the fact that another implementation uses −95% as the zero output speed ratio to obtain a wider output speed range of the transmission in each gear range.

The plotted ordinates of FIGURE 3 represent the A pump 12 stroke and the B motor 14 speed as a percent of full speed through the different speed ranges represented by the abscissa. Starting at the minus 67% speed, changing the stroke of the pump "A" to shift the capacity toward zero, while the first range brake I is applied, causes motor "B", which is running backwards at 67% of pump speed, to slow down (moving upward on the chart in range I) causing carrier $C_2$ of planetary set to begin to move in reaction to the two inputs to cause the output shaft 30 to accelerate in the forward direction. Continued stroking of the capacity of the pump "A" in the positive direction causes motor "B" to decelerate to a zero speed and to then accelerate in the forward direction until motor "B" is running in the forward direction at 100% of pump (or input) speed. At this point, the final output shaft 30 is running at the maximum first range speed which is an output powered hydromechanically from gear train package axial shaft 20 reduced through planetary set 3 by a sun $S_3$ to carrier $C_3$ reduction. In reverse range, the result is only slightly different than in range I in that the mixer planetary set 2 performs in the same way to produce an increasing hydromechanical speed on shaft 20 which is utilized by planetary set 4 rather than planetary set 3. With first range brake I inactivated and reverse range brake R activated so as to lock carrier $C_4$ in position against rotation, the effect of driving sun gear $S_4$ as shaft 20 increases in speed is to cause ring gear $R_4$ to accelerate, driving carrier $C_3$ of planetary set 3 in the direction opposite from that which it turned in range I, by reason of the intervening planetary $P_4$, and at a different output ratio, as the sun $S_4$ to ring $R_4$ reduction differs from the sun $S_3$ to carrier $C_3$ reduction ratio of the planetary set 3.

Higher speed ranges are provided through the additional combining of the hydromechanical output of carrier $C_2$ of set 2 and the mechanical input on shaft 10 reproduced on intermediate shaft 24 by means of the action of the second range planetary set 5 in cooperation with planetary set 4. For example, application of the second range brake II along with the release of first range brake I at the maximum speed in first range locks ring gear $R_5$ in a stationary position so that the effect of the mechanical input on shaft 24 and sun $S_5$ causes carrier $C_5$ to produce an output which is applied to carrier $C_4$ of planetary set 4. The second range is intended to be made operational through the application of second range brake II relatively simultaneously with release of first range brake I at a point which corresponds to a maximum forward rotation of hydraulic motor "B" as shown in FIGURE 3. In the second range, carrier $C_4$ starts at a speed which, when combined with the hydromechanical input furnished by sun $S_4$, produces a speed in the ring $R_4$ which is the same as the speed at which carrier $C_3$ was being driven at top speed in first range to cause a synchronous shift to second range. From there, the gearing is such that a deceleration of speed of the sun gear $S_4$ as driven by shaft 20 causes ring gear $R_4$ and carrier $C_3$ and output shaft 30 to further accelerate in the forward direction until such time as the speed of hydraulic motor "B" in the negative direction reaches the design point (−67%), as illustrated for range II in FIGURE 3. This is the maximum speed point in second range.

A third range is obtained by driving the ring gear $R_5$ of the second range planetary set 5 through clutch III from the hydromechanical intermediate output shaft 26 from the carrier $C_2$ of the mixer planetary set 2. At the indicated shift point of −67% of hydraulic motor "B", carrier $C_2$ and, therefore, drum shaft 26 are stationary so that third range clutch III can be engaged to provide a synchronous shift from second to third range with an accompaning release of second range brake II. From that shift point a stroking of pump "A" in the positive direction with the third range clutch engaged will cause motor "B" which is running backwards to begin to slow so that carrier $C_2$ which had been stopped begins to accelerate causing carrier $C_5$ to accelerate in the forward direction. The set 5 serves to further mix the mechanical input available at sun 5 with the basic hydromechanical output of set 2 applied to ring $R_5$ to drive carrier $C_5$ and consequently carrier $C_4$ with that resultant. A further mixing of that resultant with the basic hydromechanical output from sun $S_4$ which is also just beginning to accelerate causes ring gear $R_4$ and consequently carrier $C_3$

and final output shaft 30 to further increase in speed in the forward direction.

The maximum speed in third range is attained, as illustrated in FIGURE 3, when hydraulic motor "B" is running forwardly at 100% speed, which is the speed of the mechanical input. A synchronous shift is then obtained by "locking up" planetary set 5 by means of fourth range clutch IV as carrier $C_5$ at that point is running at the same speed as shaft 24. From then on carriers $C_5$ and $C_4$ run at constant speed proportional to the mechanical input on input shaft 10. De-stroking of the capacity of pump "A" then causes hydraulic motor "B", which was running at 100% forward speed, to decelerate causing carrier $C_2$ and, consequently, shaft 20 to decelerate. This action, when operating against the constant mechanical speed of carrier $C_4$, will cause a further acceleration in ring gear $R_4$, carrier $C_3$ and output shaft 30 in the fourth forward range. As indicated in the row of numbers on FIGURE 3 just above the Roman numerals indicating the ranges, the first to second range shift point occurs with the output shaft running at 20% of a direct drive speed. The other shift points and maximum fourth range speed are at the other ratios indicated with respect to the input speed.

In the implementation described, as illustrated in FIGURE 3, the negative slopes of the A STROKE—B SPEED lines are the same with the parallelism indicating an identity of gear ratio offset in output speed by some variable factor. The commonality of slope lines reflects the fact that each of the ranges R, II, and IV is primarily driven with the basic hydromechanical output of mixer set 2 from carrier $C_2$ through the sun to ring reduction in planetary set 4 and, as shown in FIGURE 3, with a resulting output range speed of 25% of input speed. The displacement of these three ranges, reverse, second and fourth, depends on the condition placed on carrier $C_4$. In reverse, $C_4$ is locked. In second range, $C_4$ is driven from carrier $C_5$ by the mechanical input on $S_5$ against a locked $R_5$ at the sun-carrier reduction which causes $C_4$ to rotate at approximately one-third of input speed. In fourth range, $C_4$ is locked through $C_5$ and clutch IV directly to hollow shaft 24 to turn at input speed or at a speed proportional thereto. Thus, the gear train can be described in terms of using a planetary gear set to obtain a sun to ring reduction of the basic hydromechanical output produced as a summation in a mixing element of input speed and the contribution of an infinitely variable device and using the carrier of that set to introduce different (each relatively constant) offset speeds each derived from the system input speed to produce multiple distinct ranges of output. Ranges produced in this fashion can be used as alternate ranges in a transmission and can constitute any number of such ranges for which separate offset differences can be obtained to introduce through the carrier.

5

The multi-range coaxial gear train package, as identified at 7 in FIGURE 1, including the four planetaries and the additional range clutches can be used as an entity in combinations to form other transmissions as, for example, that illustrated in block diagram in FIGURE 4. The block 7 in FIGURE 4 is also identified as a concentric multi-range gear package and comprises the same elements as those identified as 2 to 6 in FIGURE 1 or their equivalents; this demonstrates how the gear package 7 (FIGURE 4) can be used as the nucleus of a different transmission which, in the case illustrated in FIGURE 4, is a steering transmission for track laying vehicles or for multiple axle all-wheel drive wheeled vehicles. In this implementation, the propulsion hydraulics 11, which corresponds to the infinitely variable component 1 of FIGURE 1, is physically separated from the gear package 7 and connected thereto by means of transfer gears 18. The gears 37 and 38 of FIGURE 5 are deemed to be contained within the transfer gears 18 of FIGURE 4. The gears 37 and 38 provide those drives to the block 7 of FIGURE 4 which correspond to the drives of shafts 16 and 10 of FIGURE 1, respectively. This completes the description of the analogy of blocks 7 of FIGURES 1 and 4.

The provision of the transfer gears 18 permits driving both the propulsion hydraulics 11 and a steer unit 19 from a common input 8 and a power shaft 9. In the implementation of FIGURE 4, the output of the gear package 7, as indicated at 40 and 41, provides power to separately located output planet sets 50 and 51 to permit operation of the steering system as a part of the final drive of the vehicle. The steering unit 19 is connected to the output planet set 51 as indicated at 35, and by the steering interconnection 45 to output planet 50, to cause a speed differential between the two output planet sets to accomplish the steering. A steering differential input speed is provided to output planet set 51 with an equal and opposite steering input to output planet set 50. Although FIGURE 4 generally illustrates that the coaxial gear package can be used in various combinations with other components to form different transmissions, FIGURE 5 shows a specific implementation of a transmission corresponding to that shown in the block diagrams in FIGURE 4.

FIGURE 5 is a schematic illustration of a hydromechanical steering transmission according to the block diagram of FIGURE 4 which includes a modified implementation of the coaxial gear train package 7 of FIGURE 1 as indicated by the broken line box 71. The transmission, in addition to the gear train package 71, has an input shaft 8 which is connected to a power shaft 9 by means of a full reversing differential device 29 which includes two clutches, one for forward and one for reverse motion. Power shaft 9 drives both an infinitely variable component 11 which, in this implementation, is the same hydrostatic positive displacement device including a variable capacity pump "A" and a fixed capacity motor "B" as the component 1 portion of the transmission illustrated in FIGURE 1. Hydrostatic drive is provided to the gear train package 71 by means of gear 17 and transfer gears 37 to provide speed and torque to ring gear $R_{22}$ which will be described in conjunction with description of the coaxial gear package 71. Mechanical power from the input through power shaft 9 is also applied to the gear train package 71 by transfer gears 38 to provide mechanical drive to hollow shaft 39 to drive sun gear $S_{22}$.

The coaxial multi-range gear train package as illustrated in the block 71 of FIGURE 5 is modified from the package 7 of FIGURE 1 in two respects. In view of the use of the full reversing device 29 using two clutches, package 71 does not require or include a reverse brake. There is also a slight relocation of certain components resulting from the fact that in a steering transmission it is impossible to insert either the mechanical or the variable drive along the centerline of the coaxial gear package without using an offset train for the output. In package 71, the planetary sets 22, 33, 44 and 55 are comparable to and serve the same functions as the planetary sets 2, 3, 4 and 5 of package 7 in FIGURE 1 except for the fact that there is no provision for locking carrier $C_{44}$ against rotation to provide a distinct reverse range. Mechanical drive is inserted by means of hollow shaft 39 which drives the sun gear $S_{22}$ of set 22 in the same way that input shaft 10 drives sun gear $S_2$ in FIGURE 1. Hydrostatic drive is inserted by means of gear ring gear $R_{22}$ of planetary set 22 comparably to the way drum 16 drives ring gear $R_2$ in the FIGURE 1. Also comparable to the implementations illustrated in FIGURES 6 and 7, the infinitely variable (hydrostatic) drive could be inserted by an extra set of planetary gears mounted on the carrier $C_{22}$ as a substitution for ring gear $R_{22}$. The extra set of planetary gears (not illustrated) would be on the same side of $C_{22}$ as are $P_{22}$, would intermesh with $P_{22}$ and would be driven either by a ring gear (not illustrated) similar to $R_{22}$ or by a separate pinion.

The output of gear package 71 is provided by means of drum shafts 40 and 41 which are interconnected by axially located drive shaft 31 to accommodate the requirements of a steering transmission having a "steer over" device such that the transmission output is supplied to final drive planetaries to permit application of a differential speed for steering. In this implementation, 50 and 51 are the final drive planetaries and the drums 40 and 41 supply power to the ring gears 42 and 43 of the planetaries. From the ring gears 42 and 43, power is supplied to final drive axles 52 and 53 by means of the planetary gears and carriers 56 and 57 of the output planet sets. A differential speed is applied to sun gears 58 and 59 of the output planetary sets by means of transfer gears 54 and steering interconnection shaft 45. The steering differential speed is derived from steer unit 19 which is driven by power shaft 9 and which constitutes an infinitely variable device which can be implemented as a hydrostatic unit including a variable capacity positive displacement hydraulic pump unit "C" and constant capacity positive displacement hydraulic motor unit "D" similar to the "A" and "B" units used for propulsion. By means of steering unit 19, transfer gears 54, steering unit interconnection shaft 45, and idler gears 46 and 47, a rotation in either direction can be imparted to output planet set sun gear 59 with a corresponding motion in the opposite direction simultaneously applied to sun gear 58 of output planetary 50. In this way, final drive axles 52 and 53 are driven by means of gear package 71 while a differential speed for steering is imparted by the mechanisms just described.

In gear package 71, the final output shaft 31 is driven by ring gear $R_{44}$. Ring gear $R_{44}$ is attached directly to drum shaft 40, and through shaft 31 to drum shaft 41 to drive the ring gears 42 and 43 of the output planetary sets.

FIGURES 6 and 7 illustrate a variation on the hydromechanical transmission illustrated in FIGURE 1 in which the output of the infinitely variable component 1 is transmitted from the "B" unit 14 to the compound planetary gear set 2 by means of a hollow shaft 60 which drives an additional sun gear $S_9$ to drive a planet gear $P_8$ to drive planet gear $P_2$ rather than by means of the hollow shaft 16 which drives ring gear $R_2$. This variation is described and illustrated principally to avoid any inference that the transmissions in either the single output form as shown in FIGURES 1 and 6, or in the steering transmission form shown in FIGURE 5, is limited to the gear ratios normally attainable by using a planetary set in which the inputs are put on sun and ring to produce an output on the carrier. Because there is a practical limitation on the tooth-count ratios among ring, planetary and sun gears resulting from the fact that it is not feasible to use either planetary or sun gears smaller than a particular size in comparison to the other two gears of a set, it is common practice in the art to limit a planetary set to be used for ring and sun inputs to produce a carrier output to a range between 80/20 and 60/40 ratios (wherein the first number represents ring and the second number, the sun). Other ratios can be obtained by using a compound planetary set as shown in FIGURES 6 and 7 in lieu of a ring gear for one of the two inputs to the set. This compound planetary arrangement will permit, for example, a 50/50 ratio or other ratios outside of the 80/20—60/40 practical limitations.

The actual arrangement of gears $S_9$, $P_8$, and $P_2$ of FIGURE 6 is better illustrated in FIGURE 7 where, for the purpose of this explanation one planetary gear of each of the planetary sets at $P_8$, $P_2$, $P_{2a}$ is shown in elevation along with a portion of the sun gear $S_9$, $S_2$ and $S_{2a}$ with which they mesh. As previously explained with respect to the FIGURE 1 configuration, sun gear $S_2$ meshes with and drives planetary gears $P_2$ which are keyed to planetaries $P_{2a}$ by means of shafts 67 journalled in carrier 62 so that the rotation of $P_{2a}$ duplicates that of $P_2$ about shaft 67. By meshing the additional planetaries $P_8$ between the sun $S_9$ and planet gear $P_2$, the additional input derived from the infinitely variable component is placed on planetaries $P_2$ with the same effect as obtained in the ring gear version of FIGURE 1 so as to cause planetaries $P_2$ not only to rotate about their own axes but to progress about the axis dictated by the carrier $C_2$ thereby driving carrier $C_2$ and the attached shafts 20 and 26. The planetaries $P_8$ are also attached to the carrier $C_2$ by means of shafts 68 (the attachments of which are omitted from the illustration so that they do not obscure other elements) to which they are journalled for free rotation. The shafts 68 connecting planetaries $P_8$ to the carrier $C_2$ are parallel to, but spaced from, shafts 67.

In the above description of the embodiment of FIGURE 1, it is stated that the second intermediate output (hollow) shaft 24 rotates at a speed which is proportional or identical to that of input shaft 10. Since an identical speed is also a proportional speed (in the proportion 1 to 1) the term proportional speed as used below is intended to include an identical speed.

## Claims

1. A coaxial multi-range gear train for transmissions comprising: a final output shaft (30, FIG. 1), a low range and output gear train component (3, 4) including two three-element differential devices ($S_4$, $P_4$, $R_4$; $S_3$, $P_3$, $R_3$), a first intermediate output shaft (20) coaxial with said final output shaft (30) and connected to drive a first element ($S_4$, $S_3$) of each of said differential devices; the second element ($P_3$) of one of said devices being connected to said final output shaft (30) and to the third element ($R_4$) of the other one of said devices; and the third element ($R_3$) of said one device being attached to a brake (I); engagement of said brake (I) of said low range and output gear train component (3, 4) causing said final output shaft (30) to be driven in a distinct first range which is a function of the movement of said first intermediate output shaft (20); a carrier shaft ($C_4$) arranged for rotation coaxially of said final output shaft for support of the shaft of the second element ($P_4$) of the other one of said devices; characterized by two coaxial input shafts (10, 16) coaxial with said final output shaft (30); a second intermediate output shaft (24) coaxial with said final output shaft (30); a first gear train component (2) connected to said two coaxial input shafts (10, 16) for receiving two different rotational input movements (at $S_2$ and $R_2$) and for mixing those two movements to provide a third move-

ment (at $C_2$) which is a weighted sum of the two input movements; a third intermediate output shaft (26) coaxial with said final output shaft; said first gear train component being connected and operable for driving said first, second and third intermediate output shafts (20, 24, 26) with two outputs, one of said outputs being said third movement and the other one of said outputs being directly proportional to one of said two input movements; one of said outputs driving said second intermediate output shaft (24) and the other one of said outputs driving the other two (20, 26) of said intermediate output shafts; said second one (24) of said intermediate output shafts extending coaxially within one and outside the other of the other two of said intermediate output shafts; an additional range gear train component (5, 6) associated with said second intermediate output shaft (24) and with said third intermediate output shaft (26); said additional range gear train component including an additional range shaft (48); said additional range shaft comprising said carrier shaft ($C_4$) for support of said second element ($P_4$) of the other one (4) of said devices of said low range and output gear train (3, 4); said additional range gear train (5, 6) containing differential ($S_5$, $C_5$, $R_5$), clutch (III) and brake (II) means for causing said additional range shaft (48), selectively, to turn at a speed that is proportional to one of said two outputs of said first gear train component, to turn at a speed which is a weighted sum of those said two outputs or to idle; and selective engagement of said clutch (III) and brake means (II) of said additional range gear train component (5, 6) causing said final output shaft (30) to be driven in either of two additional distinct forward ranges which are each functions of said third movement and the speed of said additional range shaft.

2. The gear train of Claim 1 further characterized in that said first gear train component (2) includes a compound planetary gear set comprised of: two sun gears ($S_2$, $S_{2a}$) each having means for attachment to a different other element (10, 24) of the said gear train; a planetary carrier ($C_2$) having a first arm portion extending inwardly between said sun gears for attachment to a third other element (20) of said gear train; a second arm portion extending outwardly from said planetary carrier for attachment to a fourth element (26) of said gear train; and a set of planetary gears ($P_2$, $P_{2a}$) supported by said carrier, each gear having a bearing surface journaled in said carrier and gear engaging surface on each side thereof to simultaneously mesh with both sun gears ($S_2$, $S_{2a}$); whereby a rotational motion driving one sun gear ($S_2$) can be physically transposed through a rotational motion driving said planetary gears ($P_2$, $P_{2a}$) supported by said carrier ($C_2$) to drive the other sun gear ($S_{2a}$).

3. The gear train of Claim 2 further characterized in that said compound planetary gear set further comprises: additional gear element means including means ($R_2$, $P_8$) meshed with said gear engaging surfaces of said planetary gears ($P_2$) on one side of said carrier and means for attachment to a fifth other element (16) of said coaxial multi-range gear train.

4. The gear train of Claim 3 further characterized in that said additional gear element means comprises: a third sun gear ($S_9$, FIG. 6) attached to said fifth element; and a second set of planetary gears ($P_8$) supported on said carrier ($C_2$) meshed with and drivingly interconnecting said third sun gear ($S_9$) and said gear engaging surfaces of the first said set ($P_2$) of planetary gears.

5. The gear train of Claim 3 further characterized in that said additional gear element comprises: a ring gear ($R_2$) driven by said fifth element (16) surrounding and meshing with the said gear engaging surfaces of said first set of planetary gears ($P_2$) which are meshed with one said sun gear ($S_2$).

6. the gear train of Claim 5 further characterized in that said one sun gear ($S_2$) is attached to and driven by one (10) of said two coaxial input shafts; the said ring gear ($R_2$) is attached to and driven by the other one (16) of said two coaxial input shafts; said carrier ($C_2$) is driven by the reaction to the driving of both the sun and ring gears to generate said third movement; said first and second arm portions of said carrier are attached to and drive said first and third intermediate output shafts (20, 26) respectively; and the other said sun gear ($S_{2a}$) is attached to and drives said second intermediate output shaft (24); whereby said compound planetary set both generates said third movement as a rotational movement responsive to the rotational movements of the said two coaxial input shafts and transposes one said rotational movement through another said rotational movement to drive said second intermediate shaft (24) which is the radially intermediately positioned one of said intermediate output shafts (20, 24, 26).

7. The gear train as claimed in any one of the preceding claims further characterized in that said differential, clutch and brake means of said additional range gear train component (5, 6) includes: a planetary gear set (5) including: a sun gear ($S_5$) attached to and driven by said second intermediate shaft (24), a ring gear ($R_5$), a planetary carrier ($C_5$) attached to and driving said additional range shaft (48), and planetary gears ($P_5$) carried by said last-named carrier ($C_5$) and meshing with said last-named sun ($S_5$) and ring ($R_5$) gears for driving said last-named carrier ($C_5$) in response thereto; a second range brake (III) for selectively immobilizing said last-named ring gear ($R_5$) to drive said additional range shaft (48) from said second intermediate shaft (24) at a sun to carrier reduction; and a third range clutch (III) for selectively connecting said last-named ring gear ($R_5$) to said third intermediate shaft (26) to drive said additional range shaft (48) at a speed which is the weighted sum of the speeds of said second (24) and third (26) intermediate shafts.

8. The gear train of any one of the preceding claims further characterized in the provision of a mechanical power drive input shaft means (10); an infinitely variable drive component (1) driven by said mechanical power drive input shaft means and including a variable drive output shaft means (16); said mechanical drive input shaft means (10) and said variable drive output shaft means (16) being coaxial and each being coaxial with and connected to one of the said two coaxial input shafts (10, 16); whereby said gear train with said variable drive component constitutes an all coaxial synchronous shifting transmission.

9. The gear train of Claim 8 further characterized in that said infinitely variable drive component (1) is a hydrostatic component having hydraulic pump and motor elements (12, 14) which are coaxial with and rotate about said mechanical power drive input shaft means (10); said third movement which is a weighted sum of the rotational inputs from the mechanical power drive shaft means (10) and the said hydrostatic component (12, 14) is hydromechanical; and said output (24) of said first gear train component (2) is directly proportional to the rotational input from said mechanical power drive shaft means.

10. The gear train as claimed in any one of the preceding claims further characterized in that there is provided a second output shaft; said two output shafts (40, 41; FIG. 5) extend in opposite directions from said gear train; there is an axial cross shaft (31) extending coaxially through said gear train, said cross shaft interconnecting both said output shafts (40, 41) and also forming, in said low range and output gear component (33, 44), part of the connection between the third element (R44) of the said one device (44) and the said second element (C33) of the other said device (33) of said two three-elemental differential devices (33, 44) of said output gear component.

11. The gear train of claim 10 further characterized in the provision of two three-element final drive differential gear sets (50, 51) each having a first element (42, 43) connected to one of said output shafts (40, 41), a second element (58, 59) for attachment to a steer differential mechanism and a third element (56, 57) connected to a shaft constituting a steering transmission final drive output (52, 53); a mechanical power drive input shaft means (8, 9); an infinitely variable drive component (11) driven by said mechanical power drive input shaft means and including an output connection (17); transfer gears (29, 37, 38) including gear means interconnecting said mechanical power drive input shaft means (8, 9) and one of said two coaxial input shafts (39) and interconnecting said output connection (17) of said infinitely variable drive component (11) and the other (36) one of the said two coaxial input shafts; a differential steering means including a steer drive unit (19) powered by connection to said mechanical power drive input shaft means (9) and a steer differential mechanism (54, 45) interconnecting said steer drive unit (19) and each said second element (58, 59) of said three-element final drive differential gear sets (50, 51) for applying the output of said steer drive unit (19) positively to one and negatively to the other of said second elements (58, 59); whereby said structure constitutes a multi-range steering transmission for track laying vehicles.

12. The gear train as claimed in any one of the preceding claims further characterized in that said differential, clutch and brake means of said additional range gear train component (5, 6) also contains an additional brake means (R) to selectively cause said additional range shaft (48) to remain fixed; whereby selective engagement of said additional brake means (R) causes said final output shaft (30) to be driven in a still additional distinct range which is a reverse range which is a function of said third movement.

13. The gear train as claimed in any one of the preceding claims wherein said additional range gear train component (5, 6) includes an additional clutch means (IV) for selectively interconnecting said additional range shaft (48) and said intermediate output shaft (24) to provide still another distinct forward speed range.

## Revendications

1. Train coaxial d'engrenages à gamme multiple pour transmission comprenant: un arbre de sortie final (30, fig. 1), un composant (3, 4) de sortie et de basse gamme du train d'engrenages incluant deux dispositifs différentiels à trois éléments (S4, P4, R4; S3, P3, R3), un premier arbre de sortie intermédiaire (20) coaxial avec l'arbre de sortie final (30) et relié pour entraîner un premier élément (S4, S3) de chacun des dispositifs différentiels; le second élément (P3) d'un des dispositifs étant relié à cet arbre de sortie final (30) et au troisième élément (R4) de l'autre des dispositifs; et le troisième élément (R3) du premier des dispositifs étant fixé à un frein (I); l'engagement de ce frein (I) du composant de sortie et de basse gamme du train d'engrenages (3, 4) provoquant l'entraînement de l'arbre de sortie final (30) dans une première gamme distincte qui est une fonction du déplacement du premier arbre de sortie intermédiaire (20); un arbre porteur (C4) agencé pour tourner coaxialement par rapport à l'arbre de sortie final pour supporter l'arbre de second élément (P4) de l'autre des dispositifs; train caractérisé en ce qu'il comprend deux arbres d'entrée (10, 16) coaxiaux par rapport à l'arbre de sortie final (30); un second arbre de sortie intermédiaire (24) coaxial par rapport à l'arbre de sortie final (30); un premier composant (2) de train d'engrenages relié à ces deux arbres d'entrée coaxiaux (10, 16) pour recevoir en entrée deux mouvements de rotation différents (en $S_2$ et $R_2$) et pour mélanger ces deux mouvements pour fournir un troisième mouvement (en $C_2$) qui est une somme pondérée des deux mouvements d'entrée; un troisième arbre de sortie intermédiaire (26) coaxial par rapport à l'arbre de sortie final; ce premier composant de train d'engrenages étant relié et actionnable pour entraîner ces premier, second et troisième arbres de sortie intermédiaires (20, 24, 26) avec deux puissances disponibles, l'une de ces puissances étant le troisième mouvement et l'autre de ces puissances étant directement proportionnelle à l'un des deux mouvements d'entrée; l'une de ces puissances disponibles entraînant le second arbre de sortie intermédiaire (24) et l'autre de ces puissances disponibles entraînant les deux autres (20, 26) de ces arbres de sortie intermédiaires; le second (24) des arbres de sortie intermédiaires se prolongeant coaxialement dans l'un et hor de l'autre des deux autres arbres de sortie intermédiaires; un composant de gammes supplémentaires (5, 6) du train d'engrenages associé au second arbre de sortie intermédiaire (24) et au troisième arbre de sortie intermédiaire (26); ce composant de gammes supplémentaires du train d'engrenages incluant un arbre de gamme supplémentaire (48); cet arbre de gammes supplémentaires comprenant l'arbre porteur ($C_4$) pour le support du second élément ($P_4$) de l'autre (4) des dispositifs du composant de sortie de basse gamme (3, 4) du train d'engrenages; ce composant de gammes supplémentaires (5, 6) du train d'engrenages comprenant un différentiel ($S_5$, $C_5$, $R_5$), un embrayage (III) et un frein (II) pour obliger sélectivement, l'arbre de gamme supplémentaire (48), à tourner à une vitesse qui est proportionnelle à l'une des deux puissances disponibles du premier composant du train d'engrenages, à tourner à une vitesse qui est une somme pondérée de ces deux puissances disponibles ou à vide; et l'engagement sélectif de l'embrayage (III) et du frein (II) de ce composant de gammes supplémentaires (5, 6) du train d'engrenages provoquant l'entraînement de l'arbre de sortie final (30) dans l'une ou l'autre de deux gammes distinctes supplémentaires de march avant qui sont chacune fonction du troisième mouvement et de la vitesse de l'arbre de gammes supplémentaires.

2. Train d'engrenages selon la revendication 1, caractérisé en ce que le premier composant (2) de train d'engrenages comprend un jeu planétaire composé d'engrenages composé de: deux roues solaires ($S_2$, $S_{2a}$) ayant chacune des moyens de fixation à un autre élément différent (10, 24) du train d'engrenages; un support planétaire ($C_2$) ayant un premier bras se prolongeant intérieurement entre les roues solaires pour se fixer à un troisième autre élément (20) du train d'engrenages; un second bras se prolongeant extérieurement (26) du train d'engrenages, et un jeu d'engrenages planétaires ($P_2$, $P_{2a}$) supportés par le support planétaire, chaque engrenage ayant une surface de portage tourillonnée dans ce support et des surfaces d'engrènement de chaque côté pour s'engrener simultanément avec les deux roues solaires ($S_2$, $S_{2a}$); grâce à quoi une rotation entraînant une des roues solaires ($S_2$) peut être physiquement transposée en une rotation entraînant ces engrenages planétaires ($P_2$, $P_{2a}$) supportés par le support ($C_2$) pour entraîner l'autre roue solaire ($S_{2a}$).

3. Train d'engrenages selon la revendication 2, caractérisé en ce que le jeu planétaire composé d'engrenages comprend en outre: des éléments d'engrenage supplémentaires incluant des moyens ($R_2$, $P_8$) engrenés avec les surfaces d'engrènement des engrenages planétaires ($P_2$) sur un côté du support et des moyens de fixation à un cinquième élément (16) du train d'engrenages.

4. Train d'engrenages selon la revendication 3, caractérisé en ce que les éléments d'engrenage supplémentaires comprennent: une troisième roue solaire ($S_9$, fig. 6) fixée au cinquième élément; et un second jeu d'engrenages planétaires ($P_8$) porté par le support ($C_2$) qui s'engrènent avec la troisième roue solaire ($S_9$) les surfaces d'engrènement du premier jeu ($P_2$) de'engrenages planétaires et les entraînent.

5. Train d'engrenages selon la revendication 3, caractérisé en ce que les élements d'engrenage supplémentaires comprennent: une couronne ($R_2$) entraînée par le cinquième élément (16) entourant et engrenant les surfaces d'engrènement du premier jeu d'engrenages planétaires ($P_2$) qui sont engrenés avec une première des roues solaires ($S_2$).

6. Train d'engrenages selon la revendication 5, caractérisé en ce que la première ($S_2$) des roues solaires est attachée à un premier (10) des deux arbres d'entrée coaxiaux qui l'entraîne; la couronne ($R_2$) est attachée à l'autre (16) des deux arbres d'entrée coaxiaux qui l'entraîne; le support ($C_2$) est entraîné par la réaction à l'entraînement à la fois des roues solaires et de la couronne pour engendrer le troisième mouvement; les premier et second bras de ce support sont fixés aux premier et troisième arbres de sortie intermédiaires (20, 26) respectivement, et les entraîne; et l'autre des roues solaires ($S_{2a}$) est fixée au second arbre de sortie intermédiaire (24) et l'entraîne; grâce à quoi le jeu planétaire composé à fois engendre le troisième mouvement sous forme d'une rotation en réponse aux rotations des deux arbres d'entrée coaxiaux et transpose une des rotations en une autre rotation pour entraîner le second arbre intermédiaire (24) qui est l'arbre disposé de façon intermédiaire des arbres de sortie intermédiaires (20, 24, 26).

7. Train d'engrenages selon l'une quelconque des revendications précédentes,

caractérisé en ce que le différentiel, l'embrayage et le frein du composant de gammes supplémentaires du train d'engrenages (5, 6) comprend un jeu d'engrenages planétaires (5) comportant: une roue solaire ($S_5$) fixée au second arbre intermédiaire (24) et l'entraînant, une couronne ($R_5$), un support planétaire ($C_5$) fixé à l'arbre de gammes supplémentaires (48) et l'entraînant, et des engrenages planétaires ($P_5$) portés par le support ($C_5$) et s'engrenant avec la roue solaire ($S_5$) et la couronne ($R_5$) pour entraîner le support ($C_5$) en réponse; un frein de seconde gamme (II) pour immobiliser sélectivement la couronne ($R_5$) afin d'entraîner l'arbre de gammes supplémentaires (48) à partir du second arbre intermédiaire (24) à une réduction de la roue solaire au support; et un embrayage de troisième gamme (III) pour relier sélectivement la couronne ($R_5$) au troisième arbre intermédiaire (26) pour entraîner l'arbre de gammes supplémentaires (48) à une vitesse qui est la somme pondérée des vitesses du second (24) et du troisième (26) arbre intermédiaire.

8. Train d'engrenages selon l'une quelconque des revendications précédentes, caractérisé en ce qu'on prévoit un arbre d'entrée pour l'entraînement par énergie mécanique (10); un composant d'entraînement à variation continue (1) entraîné par l'arbre d'entrée d'entraînement par énergie mécanique et incluant un arbre de sortie à entraînement variable (16); cet arbre d'entrée à entraînement mécanique (10) et ce arbre de sortie à entraînement variable (16) étant coaxiaux et étant chacun coaxial et relié à un des deux arbres d'entrée coaxiaux (10, 16); grâce à quoi le train d'engrenages avec ce composant à entraînement variable constitue une transmission coaxiale à passage synchrone.

9. Train d'engrenages selon la revendication 8, caractérisé en ce que le composant à entraînement à variation continue (1) est un composant hydraulique comprenant une pompe hydraulique et des éléments de moteur (12, 14) qui sont coaxiaux à l'arbre d'entrée d'entraînement par énergie mécanique (10) et tourne autour de ce dernier; le troisième mouvement qui est une somme pondérée des puissances d'entrée de rotation de l'arbre d'entraînement par puissance mécanique (10) et le composant hydraulique (12, 14) est hydromécanique; et la puissance de sortie (24) du premier composant (2) du train d'engrenages est directement proportionnelle à la puissance d'entrée de rotation de l'arbre d'entraînement à puissance mécanique.

10. Train d'engrenages selon l'une quelconque des revendications précédentes, caractérisé en ce qu'on prévoit un second arbre de sortie; ces deux arbres de sortie (40, 41; fig. 5) se prolongeant dans des directions opposées à partir du train de'engrenages; il y un arbre transverse axial (31) se prolongeant axialement à travers le train d'engrenages, cet arbre transverse reliant les deux arbres de sortie (40, 41) et formant également, dans le composant de sortie et de basse gamme (33, 44), partie de la liaison entre le troisième élément ($R_{44}$) du premier dispositif (44) et le second élément ($C_{33}$) de l'autre dispositif (33) des dispositifs différentiels (33, 44) à trois éléments du composant de sortie.

11. Train d'engrenages selon la revendication 10, caractérisé en ce qu'on prévoit deux jeux d'engrenages différentiels terminaux d'entraînement à trois éléments (50, 51) ayant chacun un premier élément (42, 43) relié à un des arbres de sortie (40, 41), un second élément (58, 59) pour la fixation à un mécanisme différentiel de direction et un troisième élément (56, 57) relié à un arbre constituant une sortie d'entraînement finale de transmission de direction (52, 53); un arbre d'entrée d'entraînement par puissance mécanique (8, 9); un composant d'entraînement à variation continue (11) entraîné par l'arbre d'entrée d'entraînement par puissance mécanique et incluant une connexion de sortie (17); des engrenages de transfert (29, 37, 38) incluant des engrenages reliant l'autre entrée d'entraînement par puissance mécanique (8, 9) et un (39) des deux arbres d'entrée coaxiaux et reliant la connexion de sortie (17) du composant variable à variation continue (11) et l'autre (36) des deux arbres d'entrée coaxiaux un moyen de direction différential incluant une unité de commande de direction (19) mue par connexion à l'arbre d'entrée d'entraînement par puissance mécanique (9) et un mécanisme différientiel de direction (54, 55) reliant l'unité de commande de direction (19) et chaque second élément (58, 59) des jeux d'engrenages différentiels d'entraînement terminaux (50, 51) pour appliquer le signal de sortie de l'unité de commande de direction (19) positivement à l'un et négativement à l'autre des seconds éléments (58, 59); grâce à quoi cette structure constitue une transmission de direction à gamme multiple pour des véhicules sur voies.

12. Train d'engrenages selon l'une quelconque des revendications précédentes, caractérisé en ce que le différentiel, l'embrayage et le frein du composant de gammes supplémentaires (5, 6) du train d'engrenages contient aussi un frein supplémentaire (R) pour sélectivement obliger l'arbre de gammes supplémentaires (48) à rester fixe; grâce à quoi l'engagement sélectif de ce frein supplémentaire (B) oblige l'arbre de sortie final (30) à être entraîné dans encore une gamme supplémentaire distincte qui est une gamme inverse qui est une fonction du troisième mouvement.

13. Train d'engrenages selon l'une quelconque des revendications précédentes, caractérisé en ce que le composant de gammes supplémentaires (5, 6) du train d'engrenages incorpore un embrayage supplémentaire (IV) pour relier sélectivement l'arbre de gammes supplémentaires (48) et l'arbre de sortie intermédiaire (20) afin de fournir encore une autre gamme distincte de vitesses en marche avant.

## Patentansprüche

1. Koaxiales Mehrbereichs-Getriebe für Transmissionen mit einer Endausgangswelle (30, Figur 1), einer Niederbereichs- und Getriebeausgangskomponente (3, 4) mit zwei aus drei Elementen bestehenden Differentialeinrichtungen ($S_4$, $P_4$, $R_4$; $S_3$, $P_3$, $R_3$), einer ersten Zwischenausgangswelle (20), die zur Endausgangswelle (30) koaxial un zum Antrieb eines ersten Elements ($S_4$, $S_3$) von jeder der Differentialeinrichtungen verbunden ist, wobei das zweite Element ($P_3$) der einen Einrichtung mit der Endausgangswelle (30) und dem dritten Element ($R_4$) der anderen Einrichtung verbunden ist und das dritte Element ($R_3$) der einen Einrichtung an der Bremse (I) befestigt ist und der Eingriff der Bremse (I) der Niederbereichs- und Getriebeausgangskomponente (3, 4) bewirkt, daß die Endausgangswelle (30) in einen bestimmten ersten Bereich angetrieben wird, der eine Funktion der Bewegung der ersten Zwischenausgangswelle (20) ist, ferner mit einer Trägerwelle ($C_4$), die für eine Drehung koaxial zur Endausgangswelle angeordnet ist für eine Halterung der Welle des zweiten Elementes ($P_4$) der anderen Einrichtung, gekennzeichnet durch; zwei koaxiale Eingangswellen (10, 16), die mit der Endausgangswelle (30) koaxial sind; eine zweite Zwischenausgangswelle (24), die mit der Endausgangswelle (30) koaxial ist; eine erste Getriebekomponente (2), die mit den zwei koaxialen Eingangswellen (10, 16) verbunden ist zur Aufnahme von zwei unterschiedlichen Eingangsdrehbewegungen (bei $S_2$ und $R_2$) und zum Mischen dieser zwei Bewegungen zur Lieferung einer dritten Bewegung (bei $C_2$), die eine gewichtete Summe der zwei Eingangsbewegungen ist; eine dritte Zwischenausgangswelle (26), die mit der Endausgangswelle koaxial ist; die erste Getriebekomponente ist mit den ersten, zweiten und dritten Zwischenausgangswellen (20, 24, 26) verbunden und treibt diese mit zwei Ausgangsgrößen an, wobei die eine Ausgangsgröße die dritte Bewegung und die andere Ausgangsgröße direkt proportional ist zu einer der zwei Eingangsgrößen; die eine Ausgangsgröße treibt die zweite Zwischenausgangswelle (24) und die andere Ausgangsgröße treibt die anderen zwei Zwischenausgangswellen (20, 26) an; die zweite Zwischenausgangswelle (24) verläuft koaxial innerhalb der einen und außerhalb der anderen der zwei Zwischenausgangswellen; eine Zusatzbereichs-Getriebekomponente (5, 6) ist der zweiten Zwischenausgangswelle (24) und der dritten Zwischenausgangswelle (26) zugeordnet und enthält eine Zusatzbereichswelle (48); die Zusatzbereichswelle umfaßt die Trägerwelle ($C_4$) zur Halterung des zweiten Elementes ($P_4$) der anderen Einrichtung (4) des Niederbereichs- und Ausgangsgetriebes (3, 4); das Zusatzbereichsgetriebe (5, 6) enthält eine Differential — ($S_5$, $C_5$, $R_5$) — Kupplungs-(III)-und Brems-(II)-Einrichtung, damit die Zusatzbereichswelle (48) selektiv mit einer Drehzahl umläuft, die der einen der zwei Ausgangsgrößen der ersten Getriebekomponente proportional ist, um mit einer Drehzahl, die eine gewichtete Summe dieser zwei Ausgangsgrößen ist, umzulaufen oder leerzulaufen; wobei ein selektiver Eingriff der Kupplungs-(III)- und Brems-(II)-Einrichtung der Zusatzbereichs-Getriebekomponente (5, 6) bewirkt, daß die Endausgangswelle (30) in jedem der zwei zusätzlichen bestimmten Vorwärtsbereiche angetrieben wird, die jeweils Funktionen der dritten Bewegung und der Drehzahl der Zusatzbereichswelle sind.

2. Getriebe nach Anspruch 1, dadurch gekennzeichnet, daß die erste Getriebekomponente (2) einen Verbund-Planetengetriebesatz enthält aus zwei Sonnenrädern ($S_2$, $S_{2a}$), die jeweils Mittel zur Befestigung an einem unterschiedlichen anderen Element (10, 24) des Getriebes aufweisen, einem Planetenträger ($C_2$) mit einem ersten Armabschnitt, der sich innen zwischen den Sonnenrädern erstreckt für eine Befestigung an einem dritten anderen Element (20) des Getriebes, einem zweiten Armabschnitt, der sich außen von dem Planetenträger erstreckt für eine Befestigung an einem vierten Element (26) des Getriebes und einem Satz Planetenräder ($P_2$, $P_{2a}$), die von dem Träger gehalten sind, wobei jedes Zahnrad eine Lagerfläche, die in dem Träger gelagert ist, und Zahnradeingriffsflächen auf jeder Seite aufweist für ein gleichzeitiges Kämmen mit beiden Sonnenrädern ($S_2$, $S_{2a}$), wodurch eine das eine Sonnenrad ($S_2$) antreibende Drehbewegung physikalisch umgesetzt werden kann durch eine Drehbewegung, die die Planetenräder ($P_2$, $P_{2a}$) antreibt, die von dem Träger ($C_2$) gehalten sind, um das andere Sonnenrad ($S_{2a}$) anzutreiben.

3. Getriebe nach Anspruch 2, dadurch gekennzeichnet, daß der Verbund-Planetengetriebesatz ferner eine zusätzliche Getriebeelemente einrichtung mit Mitteln ($R_2$, $P_8$), die mit den Zahnradeingriffsflächen der Planetenräder ($P_2$) auf der einen Seite des Trägers kämmen, und Mitteln für eine Befestigung an einem fünften anderen Element (16) des koaxialen Mehrbereichs-Getriebes aufweist.

4. Getriebe nach Anspruch 3, dadurch gekennzeichnet, daß die zusätzliche Getriebeelementeinrichtung ein drittes Sonnenrad ($S_9$, Figure 6), das an dem fünften Element befestigt ist, und einen zweiten Satz Planetenräder ($P_8$) umfaßt, die an dem Träger ($C_2$) gehalten sind für ein Kämmen mit und eine antriebsmäßige Verbindung des dritten Sonnenrades ($S_9$) und der Zahnradeingriffsflächen des ersten Satzes Planetenräder ($P_2$).

5. Getriebe nach Anspruch 3, dadurch gekennzeichnet, daß die zusätzliche Getriebeelementeinrichtung einen Zahnring ($R_2$) aufweist, der durch das fünfte Element (16) angetrieben ist, das die Zahnradeingriffsflächen des ersten Satzes Planetenräder ($P_2$), die mit dem einen Sonnenrad ($S_2$) kämmen, umgibt und mit diesem kämmt.

6. Getriebe nach Anspruch 5, dadurch gekennzeichnet, daß das eine Sonnenrad ($S_2$) an der einen (10) der zwei koaxialen Eingangswellen befestigt und durch diese angetrieben ist, der Zahnring ($R_2$) an der anderen (16) der zwei koaxialen Eingangswellen befestigt und durch diese angetrieben ist, der Träger ($C_2$) durch die Reaktion des Antriebes sowohl der Sonnen- als auch Ringräder angetrieben ist zur Erzeugung der dritten Bewegung, die ersten und zweiten Armabschnitte des Trägers an den ersten bzw. dritten Zwischenausgangswellen (20, 26) befestigt sind und diese antreiben und das andere Sonnenrad ($S_{2a}$) und der zweiten Zwischenausgangswelle (24) befestigt ist und diese antreibt, wodurch der Verbund-Planetengetriebesatz sowohl die dritte Bewegung als eine Drehbewegung bei den Drehbewegungen der zwei koaxialen Eingangswellen erzeugt als auch die eine Drehbewegung durch eine andere Drehbewegung umsetzt zum Antrieb der zweiten Zwischenwelle (24), die die radial dazwischen angeordnete Welle der Zwischenausgangswellen (20, 24, 26) ist.

7. Getriebe nach einem der vorstehenden Ansprüche, dadurch gekennzeichnet, daß die Differential-, Kupplungs- und Bremseinrichtung der Zusatzbereichs-Getriebekomponente (5, 6) umfaßt: einen Planetengetriebesatz (5) mit einem Sonnenrad ($S_5$), das an der zweiten Zwischenwelle (24) befestigt und durch diese angetrieben ist, einem Zahnring ($R_5$), einem Planetenträger ($C_5$), der an der Zusatzbereichswelle (48) befestigt ist und diese antreibt, und Planetenzahnrädern ($P_5$), die von dem Träger ($C_5$) getragen sind und mit dem Sonnenrad ($S_5$) und Zahnringen ($R_5$) kämmen zum Antrieb des Trägers ($C_5$); ferner eine Zweitbereichsbremse (II) zum selektiven Blockieren des Zahnringes ($R_5$), um die Zusatzbereichswelle (48) von der zweiten Zwischenwelle (24) bei einer Sonnen-Träger-Untersetzung anzutreiben; und eine Drittbereichskupplung (III) für eine selektive Verbindung des Zahnringes ($R_5$) mit der dritten Zwischenwelle (26), um die Zusatzbereichswelle (48) mit einer Drehzahl anzutreiben, die die gewichtete Summe der Drehzahlen der zweiten (24) und dritten (26) Zwischenwellen ist.

8. Getriebe nach einem der vorstehenden Ansprüche, gekennzeichnet durch eine Einganswelle (10) für mechanische Antriebsleistung, eine unbegrenzt variable Antriebskomponente (1), die durch die Eingangswelle für mechanische Antriebsleistung angetrieben ist und eine Ausgangswelle (16) mit variablem Antrieb aufweist, wobei die Eingangswelle (10) und die variable Ausgangswelle (16) koaxial sind und jeweils koaxial zu und mit einer der zwei koaxialen Eingangswellen (10, 16) verbunden sind, wodurch das Getriebe mit der variablen Antriebskomponente eine insgesamt koaxiale synchrone Schiebetransmission bildet.

9. Gebriebe nach Anspruch 8, dadurch gekennzeichnet, daß die unbregenzt variable Antriebskomponente (1) eine hydrostatische Komponente mit hydraulischen Pump- und Motorelementen (12, 14) ist, die koaxial zu der Eingangswelle (10) für mechanische Antriebsleistung sind und um diese rotieren, die dritte Bewegung, die eine gewichtete Summe der Dreheingangsgrößen von der Eingangswelle (10) für mechanische Antriebsleistung und der hydrostatischen Komponente (12, 14) ist. hydromechanisch ist und die Ausgangsgröße (24) der ersten Getriebekomponente (2) direkt proportional zur Dreheingangsgröße von der Eingangswelle (10) ist.

10. Getriebe nach einem der vorstehenden Ansprüche, dadurch gekennzeichnet, daß eine zweite Ausgangswelle vorgesehen ist, die zwei Ausgangswellen (40, 41; Figure 5) in entgegengesetzten Richtungen von dem Getriebe ausgehen, eine axiale Querwelle (31) koaxial durch das Getriebe verläuft, beide Ausgangswellen (40, 41) verbindet und auch in der Niederbereichs- und Getriebeausgangskomponente (33, 44) einen Teil der Verbindung zwischen dem dritten Element ($R_{44}$) der einen Einrichtung (44) und dem zweiten Element ($C_{33}$) der anderen Einrichtung (33) der zwei drei Elemente aufweisenden Differentialeinrichtungen (33, 44) der Getriebeausgangskomponente bildet.

11. Getriebe nach Anspruch 10, gekennzeichnet durch zwei drei Elemente aufweisende Endantriebs-Differentialgetriebesätze (50, 51) die jeweils ein erstes Element (42, 43), das mit der einen der Ausgangswellen (40, 41) verbunden ist, ein zweites Element (58, 59) für eine Befestigung an einem Steuerungsdifferentialmechanismus und ein drittes Element (56, 57) aufweisen, das mit einer Welle verbunden ist, die einen Steuerungstransmissions-Endantriebsausgang (52, 53) bildet; eine Eingangswelle (8, 9) für mechanische Antriebsleistung; eine unbegrenzt variable Antriebskomponente (11), die durch die Eingangswelle für mechanische Antriebsleistung angetrieben ist und eine Ausgangsverbindung (17) aufweist; Über-tragungszahnräder (29, 37, 38) mit Zahnradmitteln, die die Eingangswelle (8, 9) für mechanische Antriebsleistung und eine der zwei koaxialen Eingangswellen (39) verbinden und die Ausgangsverbindung (17) der unbegrenzt variablen Antriebskomponente (11) mit der anderen (36) der zwei koaxialen Eingangswellen verbinden; eine Differentialsteuerungseinrichtung mit einer Steuerungsantriebseinheit (19), die durch Verbinden mit der Eingangswelle (9) für mechanische Antriebsleistung angetrieben ist, und einem Steuerungsdifferentialmechanismus (54, 45), der die Steuerungsantriebseinheit (19) und jedes zweite Element (58, 59) der drei Elemente umfassenden Endantriebs-Differentialgetriebesätze (50, 51) verbindet zum positiven Anlegen der Ausgangsgröbe der Steuerungsantriebseinheit (19) an das eine und zum negativen Anlegen an das andere der

zweiten Elemente (58, 59), wodurch die Struktur eine Mehrbereichs-Steuerungs-transmission für Kettenfahrzeuge bildet.

12. Getriebe nach einem der vorstehenden Ansprüche, dadurch gekennzeichnet, daß die Differential-, Kupplungs- und Bremseinrichtung zer Zusatzbereichs-Getriebekomponente (5, 6) auch eine Zusatzbremseinrichtung (R) enthält, damit die Zusatzbereichswelle (48) selektiv fest bleibt, wobei ein selektiver Eingriff der Zusatzbremseinrichtung (R) bewirkt, daß die Endausgangswelle (30) in einem noch zusätzlichen bestimmten Bereich angetrieben ist, der ein Rückwärtsbereich ist, der eine Funktion der dritten Bewegung ist.

13. Getriebe nach einem der vorstehenden Ansprüche, dadurch gekennzeichnet, daß die Zusatzbereichs-Getriebekomponente (5, 6) eine zusätzliche Kupplungseinrichtung (IV) enthält zum selektiven Verbinden der Zusatzbereichswelle (48) und der Zwischenausgangswelle (24) zur Bildung eines noch weiteren bestimmten Vorwärts-Drehzahlbereiches.

Fig.1.

Fig.2.

Fig.3.

Fig.4.

Fig.5.

2

Fig.6.

Fig.7.